(19) Europäisches Patentamt / European Patent Office / Office européen des brevets

(11) **EP 2 284 603 B1**

(12) **EUROPÄISCHE PATENTSCHRIFT**

(45) Veröffentlichungstag und Bekanntmachung des Hinweises auf die Patenterteilung:
**17.05.2017 Patentblatt 2017/20**

(51) Int Cl.:
**G02F 1/1345** (2006.01)  **G02F 1/1343** (2006.01)
**G09G 3/36** (2006.01)

(21) Anmeldenummer: **10168901.6**

(22) Anmeldetag: **08.07.2010**

(54) **LCD-Anzeigeelement**

LCD display element

Élément d'affichage à cristaux liquides

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **08.07.2009 DE 102009032273**

(43) Veröffentlichungstag der Anmeldung:
**16.02.2011 Patentblatt 2011/07**

(73) Patentinhaber: **BMG Gesellschaft für moderne Informationssysteme mbH**
**89081 Ulm (DE)**

(72) Erfinder:
- **Bayrle, Reiner**
  **89129 Langenau (DE)**
- **Bitter, Thomas**
  **73342 Bad Ditzenbach (DE)**
- **Bader, Otto**
  **88447 Warthausen (DE)**
- **Simon, Arnold**
  **89231 Neu Ulm (DE)**

(74) Vertreter: **Winter, Brandl, Fürniss, Hübner, Röss, Kaiser, Polte - Partnerschaft mbB Patent- und Rechtsanwaltskanzlei Alois-Steinecker-Strasse 22 85354 Freising (DE)**

(56) Entgegenhaltungen:
**EP-A1- 1 962 129    JP-A- 2001 311 955**

- **Yang, Deng-Ke; Wu, Shin-Tson: "Fundamentals of liquid crystal devices" 2006, John Wiley & Sons Ltd , Chichester, West Sussex, UK , XP002598148 ISBN: 9780470015421 , Seiten 274-278 * Abschnitt 10.2 * * Abbildung 10.6 ***
- **KANEKO E: "DIRECTLY ADDRESSED MATRIX LIQUID CRYSTAL DISPLAY PANEL WITH HIGH INFORMATION CONTENT" MOLECULAR CRYSTALS AND LIQUID CRYSTALS, GORDON AND BREACH, LONDON, GB, Bd. 139, Nr. 1/02, 1. Januar 1986 (1986-01-01), Seiten 81-101, XP001079395 ISSN: 0026-8941**

EP 2 284 603 B1

**Beschreibung**

Die vorliegende Erfindung betrifft ein LCD-Anzeigeelement nach dem Oberbegriff des Anspruchs 1, und eine LCD-Anzeigetafel mit einer Mehrzahl solcher LCD-Anzeigeelemente nach Anspruch 25. Derartige LCD-Anzeigeelemente umfassen einen Flüssigkristall, der zwischen zwei optisch durchlässigen Abdeckscheiben mittels eines Kleberandes eingeschlossen ist. Auf der Innenseite der beiden Abdeckscheiben ist eine Elektrodenanordnung in Matrixform mit Zeilen und Spaltenelektroden angeordnet, die in der Regel streifenförmig sind. Die streifenförmigen Zeilenelektroden sind durch Trennungsbereiche voneinander getrennt und die streifenförmigen Spaltenelektroden sind durch Abstandsbereiche voneinander getrennt. Die Überkreuzungsbereiche zwischen Zeilen- und Spaltenelektroden legen mit dem Flüssigkristall dazwischen die einzelnen Pixel des LCD-Anzeigeelements fest. Das Elektrodenmaterial besteht üblicherweise aus ITO.

Aus der EP 1 962 129 A1 ist ein Passiv-Matrix-Flüssigkristall-Anzeigeelement nach dem Oberbegriff des Anspruchs 1 bekannt. Die Zeilenzuleitungen werden unter dem Kleberand in der Ebene der Spaltenelektroden zwischen den Spaltenelektroden zu dem jeweiligen Kontakt geführt. Hierdurch wird es möglich die Randbereiche außerhalb des Sichtfeldes im Bereich der linken, rechten und oberen Seitenkante gleich schmal zu gestalten. Die in einem Passiv-Matrix-Flüssigkristall-Anzeigeelement verwendeten Flüssigkristalle sind bistabil, d. h. sie weisen zwei stabile Orientierungszustände - durchsichtig bzw. schwach streuend (AUS-Zustand) und reflektierend (EIN-Zustand) auf. Um den einen oder den anderen stabilen Orientierungszustand, d. h. um ein bestimmtes Pixel auf EIN oder AUS zu schalten, und um damit den Datenwert 1 oder 0 herbeizuführen, werden die jeweiligen Zeilen- und Spaltenelektroden mit einer unterschiedlichen Folge von Spannungsimpulsen für den Zustand EIN und für den Zustand AUS beaufschlagt. Die Mehrzahl von Spannungsimpulsen ist notwendig um die Stabilität des jeweiligen Zustands zu gewährleisten, die Schaltzeiten zu verringern und um die Lebensdauer des Flüssigkristalls nicht zu verringern. Vereinfacht ausgedrückt, schaltet der Flüssigkristall bei Erreichen einer bestimmten Mindestspannung zwischen der jeweiligen Zeilen- und Spaltenelektrode von dem Zustand AUS auf den Zustand EIN. Es hat sich herausgestellt, dass bei den üblicherweise verwendeten Folgen von Zeilen- und Spaltenspannungsimpulsen auch die Bereiche des Flüssigkristalls angesteuert werden, die in den Überkreuzungsbereichen zwischen der jeweiligen Zeilenzuleitung und den hierzu quer verlaufenden Zeilenelektroden liegen. Um dieses Übersprechen zu vermeiden, werden bei der EP 1 962 129 A1 in diesen Überkreuzungsbereichen elektrische Kontaktelemente oder Kleberelemente angeordnet. In den übrigen Bereichen zwischen zwei Spaltenelektroden kann keine unbeabsichtigte Ansteuerung erfolgen, da nur auf einer Seite des Flüssigkristalls eine Elektrodenschicht vorhanden ist. Allerdings bewirken diese kleinen nicht beeinflussbaren bzw. nicht ansteuerbaren Flächen im Zusammenspiel mit den ansteuerbaren Pixeln unerwünschte Helligkeits- und Farbeffekte.

Aus der US 2007/0139299 A1 und der US 2008/0291187 A1 sind jeweils LCD-Matrixanzeigeelemente bekannt, bei denen die einzelnen Pixel über unterschiedliche Sequenzen von Zeilen- und Spaltenspannungsimpulsen in den EIN- bzw. in den AUS-Zustand geschaltet werden. Aus den Fachaufsätzen Yang, Deng-Ke; Wu, Shin-Tson: Fundamentals of liquid crystal devices" 2006, John Wiley & Sons Ltd., Chichester, West Sussex, UK ISBN: 9780470015421, Seiten 274 - 278 und KANEKO E: "DIRECTLY ADDRESSEDMATRIX LIQUID CRYSTAL DISPLAY PANEL WITH HIGH INFORMATION CONTENT" MOLECULAR CRYSTALS AND LIQUID CRYSTALS, GORDON AND BREACH, LONDON, GB, Nr. 1/02, 1. Januar 1986 (1986-01-01), Seiten 81-101, XP001079395 ISSN:0026-8941 beschreiben Treibereinrichtungen für Passiv-matrix-LCDs.

Aus JP 2001 311955 A ist ein LCD-Anzeigelement bekannt, bei dem die Zeilenzuleitungen im Bereich der Zeilenelektroden und die Spaltenzuleitungen im Bereich der Spaltenelektroden mit dem Flüssigkristall dazwischen angeordnet sind. Da die Zeilenzuleitungen quer zu den Zeilenelektroden verlaufen, muss zwischen Zeilenelektroden und Zeilenzuleitungen eine Isolationsschicht vorgesehen werden. Diese Sandwich-Struktur bedingt störende Kapazitäten, die bei unterschiedlich langen Zeilenzuleitungen auch noch unterschiedlich groß wären. Um unterschiedlich große Kapazitäten zu vermeiden, werden die Zeilenzuleitungen gleich lang ausgebildet und überdecken alle Zeilenelektroden.

Ausgehend von der EP 1 962 129 A1 ist es daher Aufgabe der vorliegenden Erfindung ein LCD-Anzeigeelement und eine LCD-Anzeigetafel anzugeben, bei denen diese unerwünschten optisch sichtbaren Effekte möglichst gering sind.

Die Lösung dieser Aufgabe erfolgt durch die Merkmale der Ansprüche 1 bzw. 25.

Dadurch, dass die elektrischen Zeilenzuleitungen in den Abstandsbereichen zwischen zwei Spaltenelektroden in der ersten Ebene sich unabhängig von der Position des elektrischen Kontaktelementes über das gesamte Sichtfeld und die gesamte Länge der Spaltenelektroden erstrecken, kann der Bereich der Anzeige bzw. des Sichtfeldes verringert werden, der nicht gezielt beeinflusst werden kann. Durch dieses erfindungsgemäße Layout der Zeilenzuleitungen können die nicht gezielt beeinflussbaren Bereiche der Anzeige auf die elektrischen Kontaktelemente und die Kleberelemente beschränkt werden. An den elektrischen Kontaktelementen und an den Kleberelementen erübrigt sich mangels Flüssigkristall eine gezielte Beeinflussung. Durch das erfindungsgemäße Layout liegt der Flüssigkristall in den Abstandsbereichen nur zwischen Zeilenzuleitungen und den durch die Trennbereiche voneinander getrennten Zeilenelektroden. Dadurch kann im Normalbetrieb der Anzeige die auf den Flüssigkristall wirkende resultierende Spannung immer unter der Schwellspannung gehalten werden. Zur Initialisierung der Anzeige kann der Flüssigkristall in den Abstandsbereichen gezielt orientiert werden.

Zeilenzuleitungen werden nicht nur in den Abstandsbereichen zwischen zwei Spaltenelektroden geführt, sondern auch entlang der Außenseite der beiden äußersten Spaltenelektroden. Nach der vorteilhaften Ausgestaltung der Erfindung nach Anspruch 2 erstrecken sich auch diese Zeilenzuleitungen über das gesamte Sichtfeld. Hierdurch ergibt sich ein einheitliches optisches Erscheinungsbild der Anzeige.

Durch die vorteilhafte Ausgestaltung der Erfindung nach Anspruch 3 ergeben sich kurze Spaltenzuleitungen.

Durch die vorteilhafte Ausgestaltung der Erfindung nach Anspruch 5 wird die im Sichtbereich liegende Fläche in den Abstandsbereichen zwischen den Spaltenelektroden, die nicht gezielt angesteuert wird, weiter verkleinert.

Durch die Ausgestaltung nach Anspruch 6 wird sichergestellt, dass es im Bereich der Kontaktelemente nicht zu Kurzschlüssen kommt.

Für den Fall, dass die Zahl z der Zeilenelektroden kleiner ist als die Zahl s der Spaltenelektroden ist nach Anspruch 7 höchstens eine Zeilenzuleitung zwischen zwei Spaltenelektroden geführt. Für den Fall, dass die Zahl z der Zeilenelektroden größer oder gleich der Zahl s der Spaltenelektroden ist, ist nach Anspruch 8 zwischen allen Spaltenelektroden wenigstens eine Zeilenzuleitung geführt. In beiden Fällen wird erreicht, dass die Abstandsbereiche möglichst schmal ausgeführt werden können.

Bei der vorteilhaften Ausgestaltung der Erfindung nach Anspruch 9 ist zwischen allen Spaltenelektroden jeweils eine Zeilenzuleitung vorgesehen, auch wenn aufgrund der geringeren Anzahl von Zeilenelektroden gar keine Zeilenzuleitung zwischen allen Spaltenelektroden notwendig wäre. Durch die elektrisch kontaktierenden Zeilenzuleitungen und durch die Dummy-Zeilenzuleitungen werden jedoch die Beeinflussbarkeit aller Abstandsbereiche und ein gleichförmiger optischer Eindruck der Anzeige im Sichtbereich gewährleistet.

Gemäß der vorteilhaften Ausgestaltung der Erfindung nach Anspruch 10 werden sowohl die Zeilen als auch die Spaltenzuleitungen an einer gemeinsamen geraden LCD-Kante bzw. Seitenkante durch den Kleberand nach außen geführt. Hierdurch können die LCD-Elemente an den verbleibenden Seitenkanten nebeneinander zu einer LCD-Anzeigetafel angeordnet werden.

Durch die vorteilhafte Ausgestaltung der Erfindung nach Anspruch 11 ergibt sich eine Flüssigkristall-Zelle bzw. eine LCD-Anzeigeelement mit einem konstanten Abstand der beiden Abdeckscheiben, da die beiden Abdeckscheiben nicht nur im Bereich des Kleberands, sondern auch im Bereich der Klebepunkte miteinander verbunden sind.

Durch die vorteilhafte Ausgestaltung der Erfindung nach Anspruch 12 wird sichergestellt, dass auch bei Temperaturschwankungen der elektrische Kontakt zwischen Zeilenzuleitungen, elektrischen Kontaktelementen und Zeilenelektroden erhalten bleibt.

Die in Anspruch 13 genannten Werte ergeben zufriedenstellende optische Eindrücke des LCD-Anzeigeelements.

Durch die vorteilhafte Ausgestaltung der Erfindung nach Anspruch 14 können Kleberrand und Kleberelemente in einem Arbeitsgang auf eine der Abdeckscheiben aufgebracht werden. Die Kleberelemente und/oder die elektrischen Kontaktelemente können auch mit dem Kleberand verfliesen.

Durch die vorteilhafte Ausgestaltung der Erfindung nach Anspruch 15 und 16 vereinfacht sich die Herstellung der elektrischen Kontaktelemente.

Durch die vorteilhafte Ausgestaltung der Erfindung nach Anspruch 17 wird auf einfache Weise ein elektrischer Leiter bereitgestellt, der nur in einer Richtung, nämlich in senkrechter Richtung zu der ersten und zweiten Ebene elektrisch leitend ist, nicht jedoch in Querrichtung hierzu, d. h. in Richtung parallel zu der ersten und zweiten Ebene. Hierdurch wird es möglich die elektrischen Kontaktelemente vergleichsweise groß auszubilden, da ein Kurzschluss zwischen zwei benachbarten Zeilenelektroden aufgrund der fehlenden elektrischen Leitfähigkeit in Querrichtung nicht möglich ist. Da der mittlere Durchmesser der leitfähigen Partikel etwas größer ist als der Abstand der beiden Abdeckscheiben, werden die leitfähigen Partikel zwischen den beiden Abdeckscheiben eingeklemmt, so dass sich ein guter elektrischer Kontakt zu der jeweiligen Zeilenelektrode und der zugehörigen Zeilenzuleitung ergibt. Es liegt also eine einlagige Schicht aus leitfähigen Partikeln vor. Da die elektrisch leitfähigen Partikel mit Abstand zueinander angeordnet sind, sind die elektrischen Kontaktelemente in Querrichtung bzw. in Richtung parallel zu der ersten und zweiten Ebene nicht elektrische leitend. Diese gewünschte Anordnung der leitfähigen Partikel wird durch eine entsprechende Konzentration und durch entsprechende statistische Verteilung der leitfähigen Partikel in dem Klebermaterial der elektrischen Kontaktelemente oder auf der Flüssigkristall-Orientierungsschicht im Bereich der elektrischen Kontaktelemente erzielt.

Dadurch, dass die Spannungsimpulse für Zeilen und Spalten so gewählt werden, dass die beiden Ungleichungen

$$U_{S1max} - U_{S0min} > U_{Z1max} - U_{Z0max} \qquad (1)$$

und

$$U_{S0max} - U_{S1min} > U_{Z0min} - U_{Z1min} \qquad (2)$$

erfüllt sind - Anspruch 20, wird erreicht, dass während der gesamten Sequenz von Zeilen- und Spaltenspannungsimpulsen die Mindestspannung für den Zustand EIN im Überkreuzungsbereich zwischen Zeilenzuleitungen und Zeilenelektroden nicht erreicht wird.

Die Ungleichungen (1) und (2) werden am einfachsten dadurch erfüllt, dass im Vergleich zu einem herkömmlichen Ansteuerungsschema für ein Passiv-Matrix-Flüssigkristall-Anzeigeelement die Zeilenspannungsimpulse mit den Spaltenspannungsimpulsen vertauscht werden.

Durch die Erfüllung der Ungleichungen in den Unteransprüchen 21 bis 24 werden bevorzugte Relationen zwischen den einzelnen Zeilen- und Spaltenspannungsimpulsen angegeben, mit denen ein Ansteuern unerwünschter Bereiche sicher ausgeschlossen ist.

Die übrigen Unteransprüche beziehen sich auf weitere vorteilhafte Ausgestaltungen der Erfindung.

Weitere Einzelheiten, Merkmale und Vorteile der Erfindung ergeben sich aus der nachfolgenden Beschreibung einer bevorzugten Ausführungsform anhand der Zeichnung.

Es zeigt:

Fig. 1 eine schematische Darstellung einer beispielhaften Ausführungsform der Erfindung;

Fig. 2 das Layout der Spaltenelektroden der Ausführungsform nach Fig. 1;

Fig. 3 das Layout der Zeilenelektroden der Ausführungsform nach Fig. 1;

Fig. 4 eine Schnittdarstellung der Ausführungsform nach Fig. 1 entlang der Linie A-A;

Fig. 5 eine Schnittdarstellung der Ausführungsform nach Fig. 1 entlang der Linie B-B;

Fig. 6 eine Schnittdarstellung der Ausführungsform nach Fig. 1 entlang der Linie C-C;

Fig. 7a, 7b, 7c, 7d, 7e und 7f verschiedene Detaildarstellungen einer beispielhaften Ausgestaltung der elektrischen Kontaktelemente;

Fig. 8a und 8b eine Detaildarstellung eines Kleberelements;

Fig. 9 Signalformen und Signalgrößen eines mittels Multiplex angesteuerten LCD-Anzeigeelements nach dem Stand der Technik gemäß der EP 1 962 129 A1; und

Fig. 10 Signalformen und Signalgrößen eines mittels Multiplex angesteuerten LCD-Anzeigeelements gemäß der vorliegenden Erfindung.

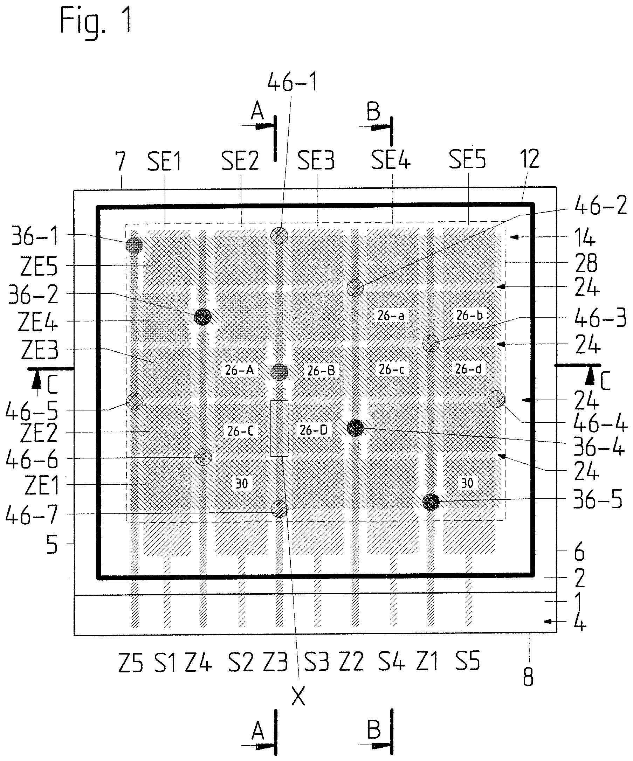

Die Figuren 1 bis 6 zeigen schematische Darstellungen eines LCD-Anzeigeelements mit fünf Zeilen und fünf Spalten zur Erläuterung des Prinzips der vorliegenden Erfindung. Realistische LCD-Anzeigeelemente weisen mehr Spalten und Zeilen auf. Typische LCD-Anzeigeelemente umfasst zwischen 80 und 350 Zeilen und Spalten.

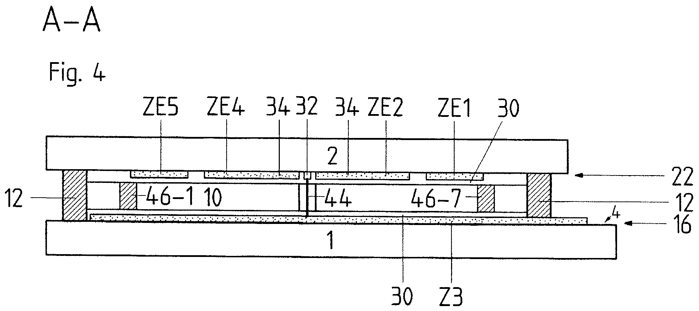

Fig. 1 zeigt ein rechteckiges LCD-Anzeigeelement mit einer ersten, optisch durchsichtigen Abdeckscheibe 1 und einer zweiten optisch durchlässigen Abdeckscheibe 2. Die beiden Abdeckscheiben 1 und 2 sind gleich breit und die erste Abdeckscheibe ist etwas länger, wodurch sich ein Kontaktrand 4 ergibt. Die Kanten der beiden Abdeckscheiben 1 und 2 legen eine linke Seitenkante 5, eine rechten Seitenkante 6, eine obere Seitenkante 7 und einer untere Seitenkante 8 fest. Zwischen den beiden Abdeckscheiben 1 und 2 ist eine Schicht aus Flüssigkristall 10 angeordnet - siehe Figuren 4 bis 6. Durch einen Kleberand 12 werden die beiden optisch durchlässigen Abdeckscheiben 1 und 2 mit Abstand zueinander miteinander verbunden. Der Flüssigkristall 10 wird durch die beiden Abdeckscheiben 1 und 2 und den Kleberand 12 vollständig eingeschlossen.

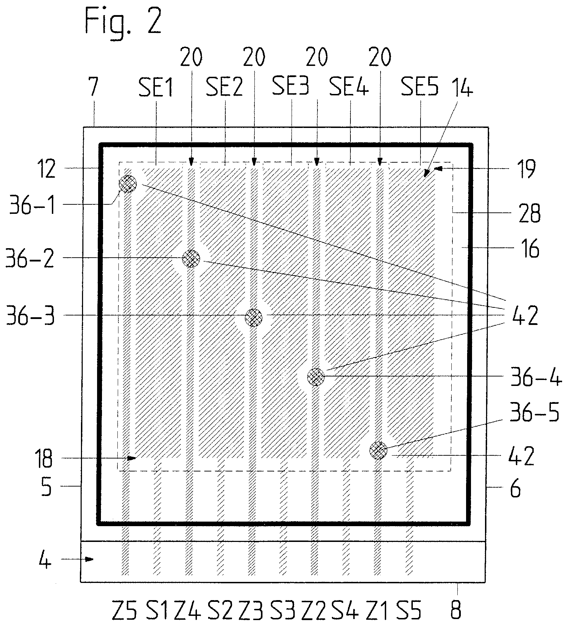

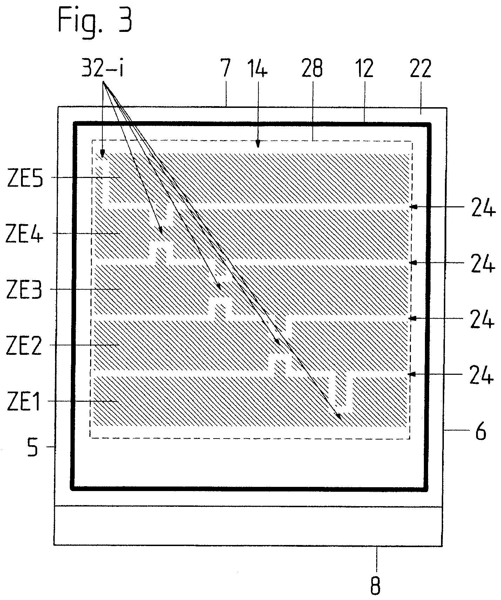

Innerhalb des Kleberands 12 ist eine matrixförmige Elektrodenanordnung 14 vorgesehen, die beispielhaft fünf, im Wesentlichen streifenförmige Zeilenelektroden ZE1 bis ZE5 und fünf, im Wesentlichen streifenförmige, rechteckige Spaltenelektroden SE1 bis SE5 aufweist. Wie aus Fig. 2 zu ersehen ist, sind die Spaltenelektroden SE in einer ersten Ebene 16 auf der Innenseite der ersten Abdeckscheibe 1 angeordnet und weisen ein erstes Elektrodenende 18 und ein zweites Elektrodenende 19 auf. Zwischen den einzelnen Spaltenelektroden SE1 bis SE5 sind Abstandsbereiche 20 vorgesehen, die die Spaltenelektroden SE1 bis SE5 elektrisch voneinander isolieren. Wie aus Fig. 3 zu ersehen ist, sind die Zeilenelektroden ZE1 bis ZE5 in einer zweiten Ebene 22 auf der Innenseite der zweiten Abdeckscheibe 2 angeordnet. Die einzelnen Zeilenelektroden ZE1 bis ZE5 werden durch Trennungsbereiche 24 voneinander elektrisch isoliert. Die Überkreuzungsbereiche zwischen Zeilen- und Spaltenelektroden ZE und SE definieren mit dem Flüssigkristall 10 dazwischen die einzelnen Pixel 26 des LCD-Anzeigeelements. Der Bereich dieser Pixel 26 legt einen rechteckigen Sichtbereich 28 fest - in Fig. 1 strichliert dargestellt, in dem Informationen optisch angezeigt werden können. Auf der Innenseite der ersten bzw. zweiten Abdeckscheibe 1, 2 ist über den Zeilen- bzw. Spaltenelektroden ZE, SE eine LCD-Orientierungsschicht 30 angeordnet.

Die Ansteuerung der Zeilen- bzw. Spaltenelektroden ZE bzw. SE erfolgt über Zeilenzuleitungen Z1 bis Z5 bzw. über Spaltenzuleitungen S1 bis S5. Sowohl die Zeilenzuleitungen Z1 bis Z5 als auch die Spaltenzuleitungen S1 bis S5 sind in der ersten Ebene 16 auf der Innenseite der ersten Abdeckscheibe 1 angeordnet. Die Spaltenzuleitungen Si kontaktieren die Spaltenelektroden SEi jeweils an deren erstem Elektrodenende 18. Die Spaltenzuleitungen Si werden im Bereich der unteren Seitenkante 8 unter dem Kleberand 12 zu dem Kontaktrand 4 geführt. Die Zeilenzuleitungen Z1 bis Z4 werden zwischen den Spaltenelektroden SE in dem Abstandsbereichen 20 geführt. Die fünfte Zeilenzuleitung Z5 zur fünften Zeilenelektrode ZE5 wird im Bereich zwischen erster Spaltenelektrode SE1 und dem Kleberand 12 geführt. Alternativ kann die fünfte Zeilenzuleitung Z5 auch unter dem Kleberand 12 angeordnet sein. Sowohl Zeilen-und Spaltenelektroden ZE, SE als auch Zeilen- und Spaltenzuleitungen S, Z bestehen aus ITO.

Wie aus Fig. 3 zu ersehen ist, weisen die einzelnen, streifenförmigen Zeilenelektroden ZEi jeweils eine Einschnürung 32 auf, in die sich die benachbarten Zeilenelektroden mit fingerartigen Zapfen 34 hineinerstrecken. Wie aus Fig. 2 zu ersehen ist, erstrecken sich die einzelnen Zeilenzuleitungen Z1 bis Z5 in der ersten Ebene 16 über das gesamte Sichtfeld 28. Im Bereich der Einschnürung 32 einer Zeilenelektrode ZEi sind elektrischen Kontaktelemente 36-i vorgesehen, die den Flüssigkristall 10 von der ersten Ebene 16 zu der zweiten Ebene 22 verdrängen und im Bereich der ersten Ebene 16 eine erste Kontaktfläche 46 und im Bereich der zweiten Ebene 22 eine zweite Kontaktfläche 40 aufweisen. Die erste Kontaktfläche 46 stellt den elektrischen Kontakt zu der jeweiligen Zeilenzuleitung Zi her und die zweite Kontaktfläche 40 stellt den elektrischen Kontakt zu Einschnürung 32 der jeweiligen Zeilenelektrode ZEi her.

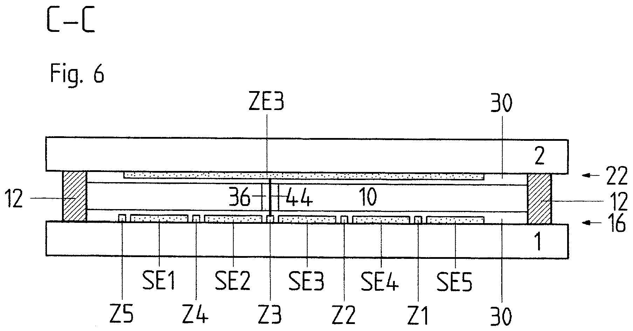

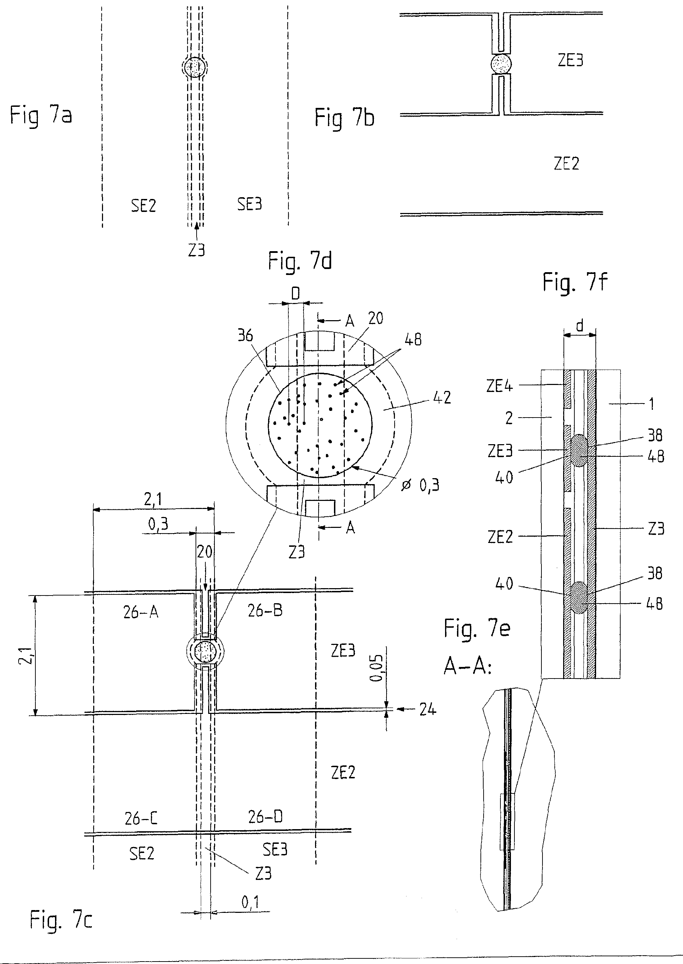

Wie aus Fig. 2 zu ersehen ist, sind die Abstandsbereiche 20 im Bereich der elektrischen Kontaktelemente 36 verbreitert, in dem die Spaltenelektroden SE halbkreisförmige Ausnehmungen 42 aufweisen. Auf diese Weise verbleibt um die ersten Kontaktflächen 46 der Kontaktelemente 36 herum ein ausreichender Isolationsabstand. Dadurch werden Kurzschlüsse sicher vermieden. Es ist zu beachten, dass die elektrischen Kontaktelemente 36 nur in Richtung senkrecht zu den Abdeckscheiben 1, 2 elektrisch leitend sind, nicht jedoch in Querrichtung hierzu. Dies ist in Fig. 4 und Fig. 6 durch senkrechten Striche 44 angedeutet. Wie diese elektrische Leitfähigkeit in nur einer Richtung erreicht wird, wird weiter unten anhand der Figuren 7d bis 7e erklärt.

Wie aus Fig. 1 und 2 zu ersehen ist, ist die erste Zeilenzuleitung Z1 zur Ansteuerung der ersten Zeilenelektrode ZE1 zwischen der vierten und der fünften Spaltenelektrode SE4, SE5 angeordnet. Die zweite Zeilenzuleitung Z2 zur Ansteuerung der zweiten Zeilenelektrode ZE3 ist im Bereich zwischen der dritten und der vierten Spaltenelektrode SE3, SE4 angeordnet. Die dritte Zeilenzuleitung Z3 zur Ansteuerung der dritten Zeilenelektrode ZE3 ist im Bereich zwischen der zweiten und der dritten Spaltenelektrode SE2, SE3 angeordnet. Die vierte Zeilenzuleitung Z4 zur Ansteuerung der vierten Zeilenelektrode ZE4 ist im Bereich zwischen der ersten und zweiten Spaltenelektrode SE1, SE2 angeordnet. Die fünfte Zeilenzuleitung Z5 zur Ansteuerung der fünften Zeilenelektrode ZE5 verläuft rechts neben der ersten Spaltenelektrode SE1.

Symmetrisch zu und in unmittelbarer Nachbarschaft zu den elektrischen Kontaktelementen 36 sind in den Überkreuzungsbereichen von Abstandsbereichen 20 und Trennungsbereichen 24 Kleberelemente 46 bzw. 46-i angeordnet. Die Kleberelemente 46 verdrängen den Flüssigkristall 10 und verbinden die beiden Abdeckscheiben 1 und 2 miteinander. Die Kleberelemente 46 erstrecken sich in gerader Linie links und rechts und parallel zu der von den Kontaktelementen 36 aufgespannten Geraden. Damit sind zwischen 1% und 5% der Überkreuzungsbereichen von Trennungsbereichen 24 und Abstandsbereichen 20 mit Kleberelementen 46 versehen. Durch die symmetrisch zu den Kontaktelementen 36 angeordneten Kleberelemente 46 wird gewährleistet, dass auch bei Temperaturänderungen die elektrischen Kontaktflächen 38, 40 der Kontaktelemente 36 mit der jeweiligen Zeilenzuleitung Zi und der Einschnürung 32 der jeweiligen Zeilenelektrode ZEi in Kontakt bleiben und keine Ablösung erfolgt.

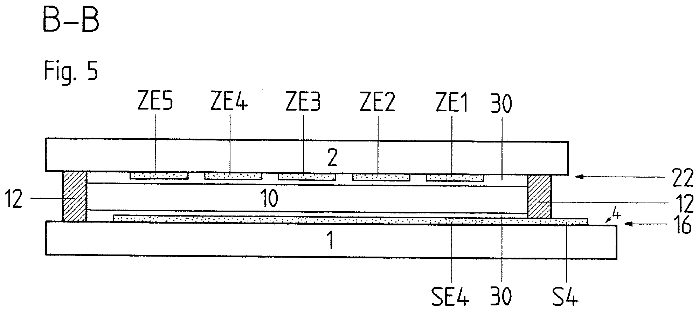

Wie vorstehend bereits erläutert, zeigt Fig. 4 eine Schnittdarstellung durch die Mitte des Abstandsbereichs 20 zwischen der zweiten und dritten Spaltenelektrode SE2, SE3 entlang der Linie A - A in Fig. 1. Fig. 5 zeigt eine Schnittdarstellung entlang der Mitte der vierten Spaltenelektrode SE4 und der zugehörigen vierten Spaltenzuleitung S4 entlang der Linie B-B. Fig. 6 zeigt eine Schnittdarstellung entlang der Mitte der dritten Zeilenelektrode ZE3 entlang der Linie C - C in Fig. 1.

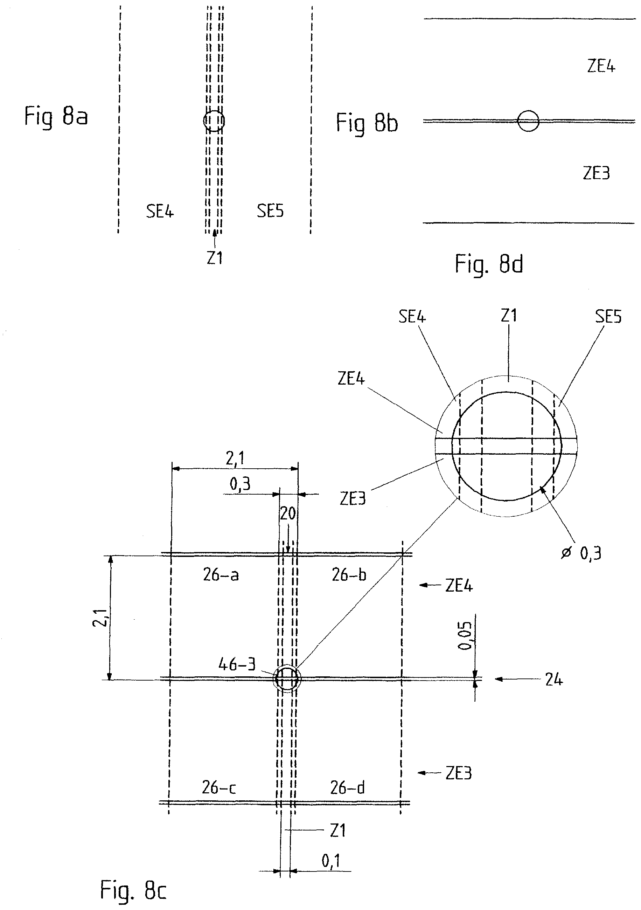

Die Darstellung der beispielhaften Ausführungsform der Erfindung in den Figuren 1 bis 6 ist lediglich schematisch und nicht maßstabsgetreu. Die Figuren 7 und 8 zeigen beispielhaft maßstabsgetreue Ausgestaltungen von jeweils vier unmittelbar benachbarten Pixeln 26-A, 26-B, 26-C und 26-D bzw. 26-a, 26-b, 26.c und 26-d. Die Pixel 26 besitzen eine rechteckige Grundform. Die Trennungsbereiche 24 sind etwa 0,05 mm breit und damit viel dünner als die etwa 0,3 mm breiten Abstandsbereiche 20 in denen die Zeilenzuleitungen Z geführt sind. Die Breite der Zeilenzuleitungen Z beträgt etwa 0,1 mm. Die streifenförmigen Einschnürungen 32 der Zeilenelektroden weisen eine Breite von etwa 1 mm auf. Der Durchmesser der Kleberelemente 46 und der elektrischen Kontaktelemente 36 beträgt etwa 0,3 mm. Die einzelnen Pixel 26 weisen eine Breite von 1,8 mm und eine Höhe von etwa 2,1 mm auf.

Figuren 7a bis 7f zeigen beispielhaft das elektrische Kontaktelement 36-4 aus Fig. 1, das die zweite Zeilenleitung Z2 mit der zweiten Zeilenelektrode ZE2 verbindet, im Detail. Fig. 7a zeigt die Lage des elektrischen Kontaktelements 36-4 in Aufsicht auf die erste Ebene 16 mit der zweiten und dritten Spaltenelektroden SE2, SE3. Fig. 7b zeigt die Lage des elektrischen Kontaktelements 36-4 in Aufsicht auf die zweite Ebene 22 mit der dritten und zweiten Zeilenelektrode ZE3, ZE2. Fig. 7c zeigt eine Überlagerung der Figuren 7a und 7b. Fig. 7d zeigt das elektrische Kontaktelement 36-4 aus Fig. 7c in Vergrößerung. Fig. 7e zeigt einen Schnitt entlang der Linie A - A in Fig. 7d. Fig. 7f schließlich zeigt einen vergrößerten Abschnitt des Schnitts nach Fig. 7e.

Wie bereits bei der Beschreibung der Fig. 1 bis 6 ausgeführt, sind die elektrischen Kontaktelemente 36 nur in Richtung senkrecht zu der Elektrodenanordnung 14 elektrisch leitend. Dies wird durch eine bestimmte Anordnung und Ausgestaltung von elektrisch leitfähigen Partikeln 48 in den elektrischen Kontaktelementen 36 erreicht. Der Abstand d - siehe Fig. 7f - der Innenseiten der beiden Abdeckscheiben 1, 2 beträgt etwa 5 bis 10 $\mu$m. Der Durchmesser eines elektrischen Kontaktelementes 36 beträgt in Aufsicht etwa 0,3 mm - siehe Fig. 7d. Die leitfähigen Partikel 48, z. B. in Form von mit Gold beschichteten Kunststoffkügelchen, weisen einen mittleren Durchmesser $d_x$ auf, der etwas größer ist als der Zellgap d (Abstand der beiden Abdeckscheiben 1,2) ist. D. h. der mittlere Durchmesser $d_x$ der leitfähigen Partikel 48 ist zwischen 10% und 20% größer als der Abstand d der beiden Abdeckscheiben 1, 2. Daher werden die leitfähigen Partikel 48 zwischen den beiden Abdeckscheiben 1, 2 eingeklemmt und gestaucht siehe Fig. 7f, so dass sich die beiden elektrischen Kontaktflächen 38 und 40 ergeben, die den elektrischen Kontakt zu der Zeilenelektrode ZE und der Zeilenzuleitung Z herstellen. Wie aus Fig. 7d zu ersehen ist, ist die einlagige Schicht aus elektrisch leitfähigen Partikeln 48 statistisch so über die Querschnittsfläche der elektrischen Kontaktelemente 36 verteilt, dass sich ein mittlerer Abstand D zwischen den einzelnen Partikeln 48 ergibt, der wesentlich größer ist als ihr Durchmesser $d_x$. Auf diese Weise sind die elektrischen Kontaktelemente 36 in senkrechter Richtung zu den Abdeckscheiben 1 und 2 elektrisch leitend und in paralleler Richtung zu den beiden Abdeckscheiben 1 und 2 elektrisch nicht leitend.

Fig. 8a, 8b, 8c und 8d zeigen in analoger Weise zu der Darstellung in den Figuren 7a bis 7d beispielhaft das Kleberelement 46-3 zwischen vier Pixeln 26-a, 26.b, 26-d und 26-c - siehe Fig. 1. Fig. 8a zeigt die Lage des Kleberelements 46-3 in Aufsicht auf die erste Ebene 16 mit der vierten und fünften Spaltenelektroden SE4, SE5. Fig. 8b zeigt die Lage des Kleberelements 46-3 in Aufsicht auf die zweite Ebene 22 mit der dritten und vierten Zeilenelektroden ZE3, ZE4. Fig. 8c zeigt eine Überlagerung der Figuren 8a und 8. Fig. 8d zeigt Kleberelement 46-3 aus Fig. 8c in Vergrößerung.

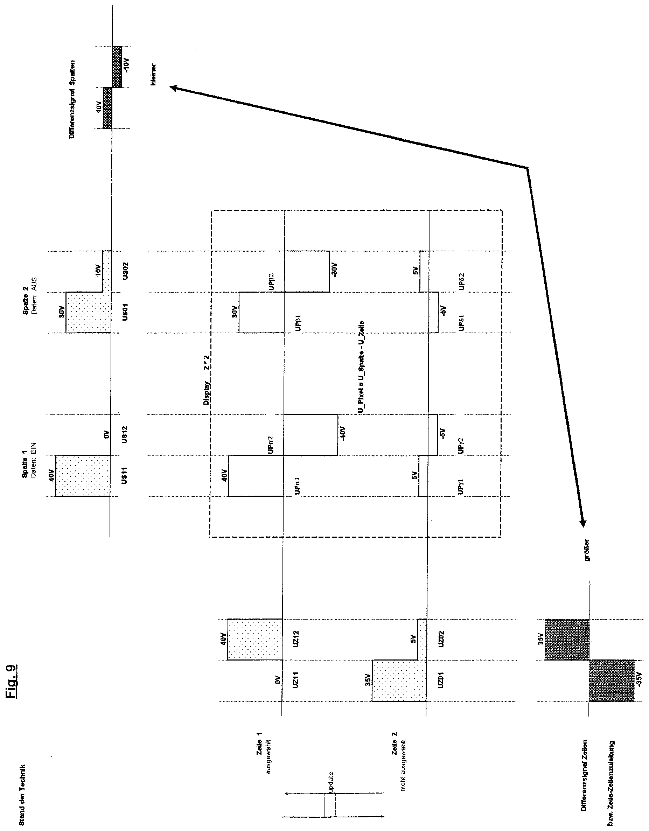

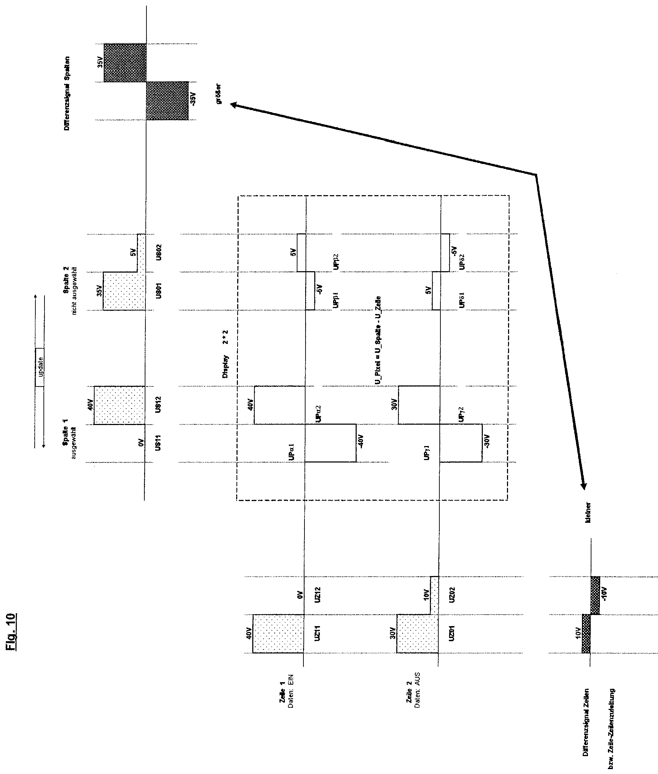

Fig. 9 zeigt die Signalformen und Signalgrößen eines mittels Multiplex angesteuerten LCD-Anzeigeelements nach dem Stand der Technik gemäß der EP 1 962 129 A1, wobei jede Zeilen- und Spaltenspannungsfolge aus zwei Spannungsimpulsen besteht, d. h. i = 2. Zur Ansteuerung (EIN-Zustand) bzw. zur Nicht-Ansteuerung (AUS-Zustand) eines bestimmten Pixels P wird die fragliche Zeilenelektrode ZE und die zugehörige Spaltenelektrode SE mit einer Folge von Zeilen- und Spaltenspannungsimpulsen in Form von zwei aufeinanderfolgenden Rechteckspannungsimpulsen $U_{Z11}$ und $U_{Z12}$ bzw. $U_{Z01}$ und $U_{Z02}$ und $U_{S11}$ und $U_{S12}$ bzw. $U_{S01}$ und $U_{S02}$ beaufschlagt. Das Pixel P schaltet in den EIN-Zustand, wenn die resultierende Pixelspannung $U_P$ als Differenz der anliegenden Zeilen- und Spaltenspannungsimpulse über der Schwellspannung $U_{Schwelle}$ liegt, bei dem der Flüssigkristall 10 aus dem AUS-Zustand in den EIN-Zustand wechselt. Für den in den LCD-Anzeigelmenten nach Fig. 9 und Fig. 10 verwendeten Flüssigkristall liegt die Schwellenspannung $U_{Schwelle}$ bei $\pm$35 Volt. Damit ergeben sich für die in Fig. 9 angegebenen Werte für die Zeilen- und Spaltenspannungsimpulse von

$$
\begin{aligned}
U_{S11} &= 40 \text{ Volt und} \quad U_{S12} = 0 \text{ Volt,} \\
U_{S01} &= 30 \text{ Volt und} \quad U_{S02} = 10 \text{ Volt,} \\
U_{Z11} &= 0 \text{ Volt und} \quad U_{Z12} = 40 \text{ Volt,} \\
U_{Z01} &= 35 \text{ Volt und} \quad U_{Z02} = 5 \text{ Volt,}
\end{aligned}
$$

die vier in Fig. 9 angegebenen resultierenden Pixelspannungsimpulsfolgen $U_{P\alpha1}$, $U_{P\alpha2}$, $U_{P\beta1}$, $U_{P\beta2}$, $U_{P\gamma1}$, $U_{P\gamma2}$ und $U_{P\delta1}$, $U_{P\delta2}$ mit

$$
\begin{aligned}
U_{P\alpha1} &= U_{S11} - U_{Z11} &= +40 \text{ V} - 0 \text{ V} &= +40 \text{ V und} \\
U_{P\alpha2} &= U_{S12} - U_{Z12} &= 0 \text{ V} - 40 \text{ V} &= -40 \text{ V,} \\
U_{P\beta1} &= U_{S01} - U_{Z11} &= +30 \text{ V} - 0 \text{ V} &= +30 \text{ V und} \\
U_{P\beta2} &= U_{S02} - U_{Z12} &= +10 \text{ V} - 40 \text{ V} &= -30 \text{ V,} \\
U_{P\gamma1} &= U_{S11} - U_{Z01} &= +40 \text{ V} - 35 \text{ V} &= +5 \text{ V und} \\
U_{P\gamma2} &= U_{S12} - U_{Z02} &= 0 \text{ V} - 5 \text{ V} &= -5 \text{ V}
\end{aligned}
$$

(fortgesetzt)

$$U_{P\delta 1} = U_{S01} - U_{Z01} \quad = +30\ V - 35\ V \quad = -5V\ und$$
$$U_{P\delta 2} = U_{S02} - U_{Z02} \quad = +10\ V - 5\ V \quad = +5\ V$$

Damit wird nur für die resultierende Pixelspannungsimpulsfolge $U_{P\alpha 1}$, $U_{P\alpha 2}$, die Schwellenspannung $U_{Schwelle}$ von $\pm 35$ Volt deutlich überschritten und das fragliche Pixel in den EIN-Zustand versetzt. Bei den übrigen Pixelspannungsimpulsfolgen $U_{P\beta 1}$, $U_{P\beta 2}$, $U_{P\gamma 1}$, $U_{P\gamma 2}$ und $U_{P\delta 1}$, $U_{P\delta 2}$ wird Schwellenspannung $U_{Schwelle}$ von $\pm 35$ Volt deutlich unterschritten, so dass diese Pixelspannungsimpulsfolgen alle den AUS-Zustand des jeweiligen Pixels darstellen.

Wird mit einem Multiplex-Ansteuerungsverfahren nach dem Stand der Technik gemäß der EP 1 962 129 A1 beispielsweise das Pixel 26-A in Fig. 1 in den EIN-Zustand und das Pixel 26-C in den AUS-Zustand geschaltet, wird an die Zeilenelektrode Z3 die Zeilenspannungsimpulsfolge $U_{Z11}$ und $U_{Z12}$, d. h. 0 und 40 Volt für den EIN-Zustand angelegt. An die Zeilenelektrode Z2 wird dagegen die Spannungsfolge $U_{Z01}$ und $U_{Z02}$, d. h. 35 und 5 Volt für AUS-Zustand angelegt. Damit wird der Flüssigkristall 10 im Bereich X in Fig. 1 im Abstandsbereich 20 zwischen der dritten Zeilenzuleitung Z3 und der zweiten Zeilenelektrode ZE2 mit der Spannungsimpulsfolge

$$U_{X1} - U_{Z11} - U_{Z01} \quad = 0\ V - 35 \quad = -35\ V$$
und
$$U_{X2} = U_{Z12} - U_{Z02} \quad = +40\ V - 5\ V \quad = +35\ V$$

beaufschlagt, d. h. der Flüssigkristall 10 im Bereich X wird mit der Schwellenspannung $U_{Schwelle}$ angesteuert und liegt somit in einem Zwischenzustand zwischen EIN und AUS.

Dieses ungewollte Erzeugen des Zwischenzustandes zwischen EIN und AUS im Bereich X in den Trennungsbereichen 20 zwischen Zeilenzuleitungen Z und Zeilenelektroden ZE wird durch die Wahl der Zeilen- und Spaltenspannungsimpulsfolgen gemäß einer bevorzugten Ausführungsform der vorliegenden Erfindung vermieden. Fig. 10 zeigt in analoger Darstellung zu Fig. 9 eine bevorzugte Ausführungsform der Erfindung, bei der jede Zeilen- und Spaltenspannungsfolge aus zwei Spannungsimpulsen besteht, d. h. i = 2. Gemäß der in Fig. 10 in analoger Weise zu Fig. 9 dargestellten Zeilen- und Spaltenspannungsimpulsfolgen wird das ungewollte Schalten in den Zwischenzustand auf einfache Weise dadurch verhindert, dass die Spannungsimpulsfolgen mit denen Zeilenelektroden und Spaltenelektroden beaufschlagt werden, vertauscht werden. D. h. es werden die Zeilenelektroden ZE mit den Spaltenspannungsimpulsfolgen und die Spaltenelektroden SE mit Zeilenspannungsimpulsfolgen gemäß dem Stand der Technik angesteuert. Dies ist in Fig. 10 dargestellt. Wie aus dem strichliert umrandeten Bereich in Fig. 10 zu ersehen ist, ergibt sich für EIN-Zustand oder den AUS-Zustand einzelner Pixel 26 folgende Situation:

$$U_{P\alpha 1} = U_{S11} - U_{Z11} \quad = 0\ V - 40\ V \quad = -40\ V\ und$$
$$U_{P\alpha 2} = U_{S12} - U_{Z12} \quad = +40\ V - 0\ V \quad = +40\ V,$$
$$U_{P\beta 1} = U_{S01} - U_{Z11} \quad = +35\ V - 40\ V \quad = -5\ V\ und$$
$$U_{P\beta 2} = U_{S02} - U_{Z12} \quad = +5\ V - 0\ V \quad = +5\ V,$$
$$U_{P\gamma 1} = U_{S11} - U_{Z01} \quad = +0\ V - 30\ V \quad = -30\ V\ und$$
$$U_{P\gamma 2} = U_{S12} - U_{Z02} \quad = +40\ V - 10\ V \quad = +30\ V$$
$$U_{P\delta 1} = U_{S01} - U_{Z01} \quad = +35\ V - 30\ V \quad = +5\ V\ und$$
$$U_{P\delta 2} = U_{S02} - U_{Z02} \quad = +5\ V - 10\ V \quad = -5\ V$$

Damit wird nur für die resultierende Pixelspannungsimpulsfolge $U_{P\alpha 1}$, $U_{P\alpha 2}$, die Schwellenspannung $U_{Schwelle}$ von $\pm 35$ Volt deutlich überschritten und das fragliche Pixel eindeutig in den EIN-Zustand versetzt. Bei den übrigen Pixelspannungsimpulsfolgen $U_{P\beta 1}$, $U_{P\beta 2}$, $U_{P\gamma 1}$, $U_{P\gamma 2}$ und $U_{P\delta 1}$, $U_{P\delta 2}$ wird Schwellenspannung $U_{Schwelle}$ von $\pm 35$ Volt deutlich unterschritten, so dass diese Pixelspannungsimpulsfolgen alle den AUS-Zustand des jeweiligen Pixels darstellen. Für die Ansteuerung einzelner Pixel 26 ergibt sich somit kein Unterschied zum Stand der Technik. D. h. ein bestimmtes Pixel 26 wird sicher in den EIN- oder AUS-Zustand versetzt.

Das beim Stand der Technik nach Fig. 9 auftretende ungewollte Schalten des Flüssigkristalls 10 im Bereich X in den Zwischenzustand wird bei der Ausführungsform nach Fig. 10 sicher vermieden, da der Flüssigkristall 10 in den Abstandsbereichen 20 immer zwischen Zeilenpotentialen bzw. Zeilenspannungsimpulsen liegt. Es wird wieder angenommen, dass das Pixel 26-A in den EIN-Zustand und das Pixels 26-C in den AUS-Austand geschaltet wird. Damit wird der Flüssigkristall 10 im Bereich X in Fig. 1 im Abstandsbereich 20 zwischen der dritten Zeilenzuleitung Z3 und der zweiten Zeilenelektrode ZE2 mit der Spannungsimpulsfolge

$$U_{X1} = U_{Z11} - U_{Z01} = +40\,V - 30\,V = +10\,V$$

und

$$U_{X2} = U_{Z12} - U_{Z02} = 0\,V - 10\,V = -10\,V$$

beaufschlagt, d. h. der Flüssigkristall 10 im Bereich X wird sicher in den AUS-Zustand geschaltet. Übersprechen bzw. das Erzeugen eines ungewollten Zwischenzustandes zwischen Zeilenelektroden ZE und Zeilenzuleitungen Z in den Trennungsbereichen 20 wird sicher vermieden.

Die Update- bzw. Beschreibrichtung verläuft im Stand der Technik nach Fig. 9 zeilenweise, wobei alle oder ausgewählte Zeilen beschrieben werden können. Bei der bevorzugten Ausführungsform der Erfindung nach Fig. 10 verläuft die Update- bzw. Beschreibrichtung aufgrund der Vertauschung von Zeilen- und Spaltenspannungen dagegen spaltenweise. Wiederum können alle oder ausgewählte Spalten beschrieben werden.

Einzelne LCD-Anzeigeelemente gemäß der vorliegenden Erfindung lassen sich in gleicher Weise zu Anzeigetafeln verbinden, wie dies anhand der Figuren 9a, 9b und 10 in EP 1 962 129 A1 beschrieben ist. Durch die Schindelanordnung gemäß Fig. 10 in EP 1 962 129 A1 können nahezu beliebig große Anzeigetafeln bereit gestellt werden.

Bezugszeichenliste:

| | |
|---|---|
| ZE1 bis ZE5 | Zeilenelektroden |
| SE1 bis SE5 | Spaltenelektroden |
| Z1 bis Z5 | Zeilenzuleitungen |
| S1 bis S5 | Spaltenzuleitungen |
| 1 | erste Abdeckscheibe |
| 2 | zweite Abdeckscheibe |
| 4 | Kontaktrand |
| 5 | linke Seitenkante |
| 6 | rechte Seitenkante |
| 7 | obere Seitenkante |
| 8 | untere Seitenkante |
| 10 | Flüssigkristall |
| 12 | Kleberand |
| 14 | Elektrodenanordnung |
| 16 | erste Ebene |
| 18 | erstes Elektrodenende |
| 19 | zweites Elektrodenende |
| 20 | Abstandsbereiche |
| 22 | zweite Ebene |
| 24 | Trennungsbereiche |
| 26 | Pixel |
| 28 | Sichtfeld |
| 30 | LCD-Orientierungsschicht |
| 32 | Einschnürung der ZE |
| 34 | fingerartigen Zapfen |
| 36 | elektrische Kontaktelemente |
| 38 | erste Kontaktfläche von 36 |
| 40 | zweite Kontaktfläche von 36 |
| 42 | Ausnehmung in SE |
| 44 | senkrechte Striche in 36 |
| 46 | Kleberelemente |
| 48 | leitfähige Partikel in 36 |

**Patentansprüche**

1.  LCD-Anzeigeelement in Form einer Pixelanordnung mit einer Mehrzahl von Pixeln, mit

    - einer ersten und einer zweiten optisch durchlässigen Abdeckscheibe (1, 2), die über einen Kleberand (12) mit Abstand zueinander verbunden sind,
    - einem zwischen den beiden Abdeckscheiben (1, 2) und dem Kleberand (12) angeordneten Flüssigkristall (10),
    - einer in einem Sichtfeld (28) vorgesehenen Elektrodenanordnung (14) in Matrixform mit s Spaltenelektroden (SE), die in einer ersten Ebene (16) auf der Innenseite der ersten Abdeckscheibe (1) angeordnet sind, und z Zeilenelektroden (ZE), die in einer zweiten Ebene (22) auf der Innenseite der zweiten Abdeckscheibe (2) angeordnet sind,

    -- wobei zwischen benachbarten Zeilenelektroden (ZE) Trennungsbereiche (24) und zwischen benachbarten Spaltenelektroden (SE) Abstandsbereiche (20) vorgesehen sind, und
    -- wobei die Überkreuzungsbereiche zwischen Zeilen- und Spaltenelektroden (ZE, SE) einzelne Pixel (26) festlegen,

    - z elektrischen Zeilenzuleitungen (Z) zur Ansteuerung jeweils einer der z Zeilenelektroden (ZE),
    - s elektrischen Spaltenzuleitungen (S) zur Ansteuerung jeweils einer der s Spaltenelektroden (SE),

    -- wobei die Zeilenzuleitungen (Z) mittels elektrischer Kontaktelemente (36) elektrisch mit der jeweiligen Zeilenelektrode (ZE) verbunden sind,
    -- wobei Zeilen- und Spaltenzuleitungen (Z, S) in der ersten Ebene (16) auf der Innenseite der ersten Abdeckscheibe (1) angeordnet und unter dem Kleberand (12) nach außen geführt sind, und
    - -wobei wenigstens eine der z Zeilenzuleitungen (Z) im Abstandsbereich (20) zwischen zwei Spaltenelektroden (SE) verläuft,

    **dadurch gekennzeichnet,**
    **dass** diejenigen elektrischen Zeilenzuleitungen (Z), die im Abstandsbereich (20) zwischen zwei Spaltenelektroden (SE) verlaufen, sich quer über die Projektion aller Zeilenelektroden (ZE) auf die erste Ebene (16) erstrecken,
    **dass** jede Zeilenelektrode (ZE) eine Einschnürung (32) aufweist, dass das jeweilige elektrische Kontaktelement (36) diese Einschnürung (32) kontaktiert,
    **dass** im Bereich der Einschnürung (32) einer Zeilenelektrode (ZE) die benachbarten Zeilenelektroden (ZE) fingerartige Zapfen (34) aufweisen, die sich zu der Einschnürung (32) hin erstrecken und dass der Trennungsbereich (24) zwischen benachbarten Zeilenelektroden (ZE) auch zwischen Einschnürung (32) und fingerartigen Zapfen (34) erhalten bleibt.

2.  LCD-Anzeigeelement nach Anspruch 1, **dadurch gekennzeichnet, dass** alle z elektrischen Zeilenzuleitungen (Z) sich quer über die Projektion aller Zeilenelektroden (ZE) auf die erste Ebene erstrecken.

3.  LCD-Anzeigeelement nach einem der vorhergehenden Ansprüche, **dadurch gekennzeichnet,**
    **dass** die z Zeilenelektroden (ZE) und die s Spaltenelektroden (SE) jeweils ein erstes und ein zweites Elektrodenende (18, 19) aufweisen und
    **dass** die Spaltenzuleitungen (S) die Spaltenelektroden (SE) an den ersten Elektrodenenden (18) kontaktieren.

4.  LCD-Anzeigeelement nach einem der vorhergehenden Ansprüche, **dadurch gekennzeichnet,**

    - **dass** die elektrischen Kontaktelemente (36) zwischen Zeilenzuleitung (Z) in der ersten Ebene (16) und zugehöriger Zeilenelektrode (ZE) in der zweiten Ebene (20) in den Abstandsbereichen (20) angeordnet sind,
    - **dass** die elektrischen Kontaktelemente (36) jeweils eine erste Kontaktfläche (38) und eine zweite Kontaktfläche (40) aufweisen,
    - **dass** die ersten Kontaktflächen (38) die jeweilige Zeilenzuleitung (Z) in der ersten Ebene (16) kontaktieren, und
    - **dass** die zweiten Kontaktflächen (40) die der jeweiligen Zeilenzuleitung (Z) zugeordnete Zeilenelektrode (ZE) in der zweiten Ebene (22) kontaktieren.

5.  LCD-Anzeigeelement nach einem der vorhergehenden Ansprüche, **dadurch gekennzeichnet, dass** die Einschnürung (32) an der obersten und an untersten Zeilenelektrode (ZE5, ZE1) jeweils an dem Rand der obersten bzw. der untersten Zeilenelektrode (ZE5, ZE1) angeordnet ist, der der oberen bzw. der unteren Seitenkante (7, 8) zugewandt ist.

**6.** LCD-Anzeigeelement nach einem der vorhergehenden Ansprüche, **dadurch gekennzeichnet, dass** die Spaltenelektroden (SE) in der ersten Ebene (16) im Bereich um die ersten Kontaktflächen (38) Ausnehmungen (42) aufweisen, so dass die Abstandsbereiche (20) in diesem Bereich verbreitert sind.

**7.** LCD-Anzeigeelement nach einem der vorhergehenden Ansprüche, **dadurch gekennzeichnet, dass** für z < s zwischen zwei benachbarten Spaltenelektroden (SE) höchstens eine der z Zeilenzuleitungen (Z) geführt ist.

**8.** LCD-Anzeigeelement nach einem der vorhergehenden Ansprüche 1 bis 6, **dadurch gekennzeichnet, dass** für z ≥ s zwischen allen benachbarten Spaltenelektroden (SE) wenigstens eine der z Zeilenzuleitungen (Z) geführt ist.

**9.** LCD-Anzeigeelement nach einem der vorhergehenden Ansprüche 1 bis 6, **dadurch gekennzeichnet, dass** in allen Abstandsbereichen (20) zwischen den Spaltenelektroden (SE) Zeilenzuleitungen (Z) angeordnet sind.

**10.** LCD-Anzeigeelement nach einem der vorhergehenden Ansprüche, **dadurch gekennzeichnet, dass** das LCD-Anzeigeelement wenigstens eine gerade LCD-Kante (5, 6, 7, 8) aufweist und dass die Zeilen- und die Spaltenzuleitungen (Z, S) an dieser geraden LCD-Kante (8) unter dem Kleberand (12) nach außen geführt sind.

**11.** LCD-Anzeigeelement nach einem der vorhergehenden Ansprüche, **dadurch gekennzeichnet, dass** an Überkreuzungsbereichen der Abstandsbereiche (20) mit den Trennungsbereichen (24) Kleberelemente (46) angeordnet sind.

**12.** LCD-Anzeigeelement nach Anspruch 11, **dadurch gekennzeichnet, dass** die Kleberelemente (46) symmetrisch und in Nachbarschaft zu den elektrischen Kontaktelementen (36) angeordnet sind.

**13.** LCD-Anzeigeelement nach einem der vorhergehenden Ansprüche 11 bis 12, **dadurch gekennzeichnet, dass** zwischen 1% und 5% und insbesondere zwischen 2% und 3% der Überkreuzungsbereiche zwischen Abstands- und Trennungsbereichen (20, 24) mit Kleberelementen (46) versehen sind.

**14.** LCD-Anzeigeelement nach einem der Ansprüche 11 bis 13, **dadurch gekennzeichnet, dass** die Kleberelemente (46) aus dem gleichen Material wie der Kleberand (12) bestehen.

**15.** LCD-Anzeigeelement nach einem der Ansprüche 11 bis 15, **dadurch gekennzeichnet, dass** die elektrischen Kontaktelemente (36) aus dem gleichen Material wie der Kleberand (12) bestehen, das zusätzlich mit leitfähigen Partikeln (48) versetzt ist.

**16.** LCD-Anzeigeelement nach einem der vorhergehenden Ansprüche 1 bis 13, **dadurch gekennzeichnet, dass** auf den Innenseiten der beiden Abdeckscheiben (1, 2) eine Flüssigkristall-Orientierungsschicht (30) vorgesehen ist, und
**dass** die elektrischen Kontaktelemente (36) durch gezieltes Aufbringen von zusätzlichem Orientierungsschichtmaterial mit elektrisch leitfähigen Partikeln (48) auf die Flüssigkristall-Orientierungsschicht (30) bereitgestellt sind.

**17.** LCD-Anzeigeelement nach Anspruch 15 oder 16, **dadurch gekennzeichnet, dass** die leitfähigen Partikel (48) einen mittleren Durchmesser ($d_x$) aufweisen, der zwischen 10% und 15% größer ist als der Abstand (d) der beiden Abdeckscheiben (1, 2), und dass die einzelnen leitfähigen Partikel (48) in einer Richtung parallel zu der ersten oder zweiten Ebene (16, 22) nicht durchgehend in Kontakt zueinander stehen.

**18.** LCD-Anzeigeelement nach einem der vorhergehenden Ansprüche, **dadurch gekennzeichnet, dass** der Flüssigkristall (10) eine verdrillte Flüssigkristallstruktur aufweist und insbesondere ein TN- oder ein ETN-Flüssigkristall ist oder dass der Flüssigkristall (10) vom Typ ferroelektrisch, smektisch A oder smektisch B ist oder dass der Flüssigkristall (10) ein cholesterischer (ChLCD), Flüssigkristall ist.

**19.** LCD- Anzeigeelement nach einem der vorhergehenden Ansprüche, **gekennzeichnet durch**
eine Treibereinrichtung, welche ausgebildet ist zur Ansteuerung der einzelnen Pixel durch Beaufschlagung der Spaltenelektroden (SE) mit einer ersten Sequenz von Spaltenspannungspulsen $U_{S0i}$ mit $i \in \{1 .. n\}$ mit $n \geq 2$ für den Zustand AUS und **durch** Beaufschlagung mit einer zweiten Sequenz von Spaltenspannungsimpulsen $U_{S1i}$ mit $i \in \{1 .. n\}$ mit $n \geq 2$ für den Zustand EIN, und
**durch** Beaufschlagung der Zeilenelektroden (ZE) mit einer ersten Sequenz von Zeilenspannungsimpulsen $U_{Z0i}$ mit

$i \in \{1 .. n\}$ mit $n \geq 2$ für den Zustand AUS und **durch** Beaufschlagung mit einer zweiten Sequenz von Zeilenspannungsimpulsen $U_{Z1i}$ mit $i \in \{1 .. n\}$ mit $n \geq 2$ für den Zustand EIN.

20. LCD- Anzeigeelement nach Anspruch 19, **dadurch gekennzeichnet, dass** die Treibereinrichtung ausgebildet ist, Spannungsimpulse ($U_{Z0i}$; $U_{Z1i}$; $U_{S0i}$; $U_{S1i}$) zu erzeugen, welche folgende Ungleichungen (1) und (2) erfüllen:

$$U_{S1max} - U_{S0min} > U_{Z1max} - U_{Z0max} \qquad (1)$$

und

$$U_{S0max} - U_{S1min} > U_{Z0min} - U_{Z1min} \qquad (2)$$

wobei $U_{S1max}$ der maximale Spaltenspannungsimpuls aus der zweiten Sequenz von Spaltenspannungsimpulsen $U_{S1i}$ ist,
wobei $U_{S0min}$ der minimale Spaltenspannungsimpuls aus der ersten Sequenz von Spaltenspannungsimpulsen $U_{S0i}$ ist,
wobei $U_{Z1max}$ der maximale Zeilenspannungsimpuls aus der zweiten Sequenz von Zeilenspannungsimpulsen $U_{Z1i}$ ist,
wobei $U_{Z0min}$ der minimale Zeilenspannungsimpuls aus der ersten Sequenz von Zeilenspannungsimpulsen $U_{Z0i}$ ist.

21. LCD-Anzeigeelement nach Anspruch 19 oder 20, **dadurch gekennzeichnet, dass** für die Spalten- und Zeilenspannungsimpulse gilt:

$$\Delta U = U_{S1max} - U_{S0max},$$

und

$$\Delta U = U_{S0min} - U_{S1min}.$$

22. LCD-Anzeigeelement nach Anspruch 21, **dadurch gekennzeichnet, dass** für die Spalten- und Zeilenspannungsimpulse gilt:

$$U_{Z0max} = U_{Z1max} - 2\Delta U,$$

und

$$U_{Z0min} = U_{Z1min} + 2\Delta U.$$

23. LCD-Anzeigeelement nach einem der vorhergehenden Ansprüche 21 bis 22, **dadurch gekennzeichnet, dass** für die Spalten- und Zeilenspannungsimpulse gilt:

$$U_{Z1max} - U_{Z1min} = U_{S1max} - U_{S1min},$$

und

$$2\Delta U < (U_{Z1max} - U_{Z1min}) / 2$$

24. LCD-Anzeigeelement nach einem der vorhergehenden Ansprüche 20 bis 23, **dadurch gekennzeichnet, dass** für die Spalten- und Zeilenspannungsimpulse gilt:

$$U_{Z1max} = U_{S1max},$$

$$U_{Z1min} = U_{S1min},$$

und

$$U_{Z1max} > U_{S0max} > U_{Z0max} > U_{Z0min} > U_{S0min} > U_{Z1min}$$

25. LCD-Anzeigetafel mit einer Mehrzahl von LCD-Anzeigeelementen nach einem der vorhergehenden Ansprüche, wobei die LCD-Elemente rechteckig sind, wobei die Zeilen- und Spaltenzuleitungen (Z, S) der einzelnen LCD-Elemente an einer der vier Rechteckseiten (4, 8) durch den Kleberrand (12) geführt sind und wobei die einzelnen LCD-Elemente an wenigstens einer der drei anderen Rechteckseiten (5, 6, 7) auf Stoß aneinander gefügt sind.

**Claims**

1. An LCD display element in the form of a pixel arrangement having a plurality of pixels, with

   - a first and a second optically translucent cover plate (1, 2), which are connected to one another, spaced from one another, via an adhesive rim (12),
   - a liquid crystal (10) positioned between the two cover plates (1, 2) and the adhesive rim (12),
   - an electrode assembly (14) in matrix form with s column electrodes (SE), which are arranged within a first plane (16) on the interior side of the first cover plate (1), and z row electrodes (ZE), which are arranged within a second plane (22) on the interior side of the second cover plate (2), said assembly being provided within a viewing field (28),

     -- wherein separation areas (24) are provided between adjacent row electrodes (ZE), and spacing areas (20) are provided between adjacent column electrodes (SE), and
     -- wherein the crossover areas between row and column electrodes (ZE, SE) define individual pixels (26),

   - z electrical row leads (Z), each for activating one of the z row electrodes (ZE),
   - s electrical column leads (S), each for activating one of the s column electrodes (SE),

     -- wherein the row leads (Z) are electrically connected to the respective row electrodes (ZE) via electrical contact points (36),

   - wherein the row and column leads (Z, S) are arranged within the first plane (16) on the interior side of the first cover plate (1) and are guided to the outside under the adhesive rim (12), and
   - wherein at least one of the z row leads (Z) is routed between two of the s column electrodes (SE) in the spacing area (20),

   **characterized in**
   **that** the z row leads (Z) that run in the spacing area (20) between two column electrodes (SE), extend to the first plane (16) transversely over the projection of all row electrodes (ZE),
   **that** each row electrode (ZE) includes a constriction (32),
   **that** the respective electrical contact point (36) contacts this constriction (32), that in the area of the constriction (32) of a row electrode (ZE), the adjacent row electrodes (ZE) comprise finger-type protrusions (34) which extend towards the constriction (32), and
   **that** the separation area (24) between adjacent row electrodes (ZE) is also maintained between constriction (32) and finger-type protrusions (34).

2. The LCD display element according to Claim 1, **characterized in that** all z electrical row leads (Z) extend to the first plane transversely over the projection of all row electrodes (ZE).

3. The LCD display element according to one of the preceding claims, **characterized in that** the z row electrodes (ZE) and the s column electrodes (SE) each have a first and a second electrode end (18, 19), and that the column leads (S) contact the column electrodes (SE) at the first electrode ends (18).

4. The LCD display element according to one of the preceding claims, **characterized in that**

- the electrical contact points (36) are arranged in spacing areas (20) between row leads (Z) in the first plane (16) and corresponding row electrodes (ZE) in the second plane (20),
- that the electrical contact points (36) each have a first contact surface (38) and a second contact surface (40),
- that the first contact surfaces (38) contact the respective row lead (Z) in the first plane (16), and
- that the second contact surfaces (40) contact the row electrode (ZE) associated with the respective row lead (Z) in the second plane (22).

5. The LCD display element according to one of the preceding claims, **characterized in that** the constriction (32) is arranged at the uppermost and the lowermost row electrode (ZE5, ZE1) each time at the rim of the respective uppermost or lowermost row electrode (ZE1, ZE5) which faces the upper or lower side edge (7, 8), respectively.

6. The LCD display element according to one of the preceding claims, **characterized in that** the column electrodes (SE) in the first plane (16) include recesses (42) in the area around the first contact surfaces (38) such that the spacing areas (20) are broadened in this area.

7. The LCD display element according to one of the preceding claims, **characterized in that** if z < s, a maximum of one of the z row leads (Z) is routed between two adjacent column electrodes (SE).

8. The LCD display element according to one of the preceding claims 1 to 6, **characterized in that** if $z \geq s$, a minimum of one of the z row leads (Z) is routed between all adjacent column electrodes (SE).

9. The LCD display element according to one of the preceding claims 1 to 6, **characterized in that** row leads (Z) are arranged in all spacing areas (20) between column electrodes (SE).

10. The LCD display element according to one of the preceding claims, **characterized in that** the LCD display element has at least one straight LCD edge (5, 6, 7, 8), and **in that** the row and column leads (Z, S) and are guided to the outside under the adhesive rim (12) at this straight LCD edge (8).

11. The LCD display element according to one of the preceding claims, **characterized in that** adhesive elements (46) are located at areas of intersection between the spacing areas (20) and the separation areas (24).

12. The LCD display element according claim 11, **characterized in that** the adhesive elements (46) are arranged in symmetry to and in the vicinity of the electrical contact points (36).

13. The LCD display element according to one of the preceding claims 11 to 12, **characterized in that** between 1% and 5%, and in particular between 2% and 3%, of the areas between intersection of spacing areas (20) and separation areas (24) are provided with adhesive elements (46).

14. The LCD display element according to one of claims 11 to 13, **characterized in that** the adhesive elements (46) are made of the same material as the adhesive rim (12).

15. The LCD display element according to one of the claims 11 to 15, **characterized in that** the electrical contact points (36) are made of the same material as the adhesive rim (12), additionally laced with conductive particles (48).

16. The LCD display element according to one of the claims 1 to 13 **characterized in that** a liquid crystal orientation layer (30) is positioned on the interior sides of the two cover plates (1, 2), and **in that** the electrical contact points (36) are created through a targeted application of additional orientation layer material with electrically conductive particles (48) on the liquid crystal orientation layer (30).

17. The LCD display element according to claim 15 or 16, **characterized in that** the conductive particles (48) have an average diameter ($d_x$) that is 10% to 15% greater than the distance (d) between the two cover plates (1, 2), and **in that** the individual conductive particles (48) are not constantly in contact with one another in a direction parallel to the first or second planes (16, 22).

18. The LCD display element according to one of the preceding claims, **characterized in that** the liquid crystal (10) has a twisted liquid crystal structure and is in particular a TN or an ETN liquid crystal or that the liquid crystal (10) is of the ferroelectrical, smectic A, or smectic B type, or that the liquid crystal (10) is a cholesteric (ChLCD) liquid crystal.

19. The LCD display element according to one of the preceding claims, **characterized in that** a driving unit configured to drive the individual pixels by applying to the column electrodes (SE) a first sequence of column voltage pulses $U_{S0i}$ with $i \in \{1 .. n\}$ with $n \geq 2$ for the condition OFF and by applying a second sequence of column voltage pulses $U_{S1i}$ with $i \in \{1 .. n\}$ with $n \geq 2$ for the condition ON, and by applying to the row electrodes (ZE) a fist sequence of row voltage pulses $U_{Z0i}$ with $i \in \{1 .. n\}$ with $n \geq 2$ for the condition OFF and by applying a second sequence of row voltage pulses $U_{Z1i}$ with $i \in \{1 .. n\}$ with $n \geq 2$ for the condition ON.

20. The LCD display element according to claim 19, **characterized in that** the drive unit is configured to generate voltage pulses ($U_{Z0i}$; $U_{Z1i}$; $U_{S0i}$; $U_{S1i}$) which fulfil the following unequations (1) and (2):

$$U_{S1max} - U_{S0min} > U_{Z1max} - U_{Z0max} \qquad (1)$$

and

$$U_{S0max} - U_{S1min} > U_{Z0min} - U_{Z1min} \qquad (2)$$

wherein $U_{S1max}$ is the maximum column voltage pulse of the second sequence of column voltage pulses $U_{S1i}$, wherein $U_{S0min}$ is the minimum column voltage pulse of the first sequence of column voltage pulses $U_{S0i}$, wherein $U_{Z1max}$ is the maximum row voltage pulse of the second sequence of row voltage pulses $U_{Z1i}$, wherein $U_{Z0min}$ is the minimum row voltage pulse of the first sequence of row voltage pulses $U_{Z0i}$.

21. The LCD display element according to claim 19 or 20, **characterized in that** the following applies to the column and row voltage pulses:

$$\Delta U = U_{S1max} - U_{S0max},$$

and

$$\Delta U = U_{S0min} - U_{S1min}.$$

22. The LCD display element according to claim 21, **characterized in that** the following applies to the column and row voltage pulses:

$$U_{Z0max} = U_{Z1max} - 2\Delta U,$$

and

$$U_{Z0min} = U_{Z1min} + 2\Delta U.$$

23. The LCD display element according to one of the preceding claims 21 to 22, **characterized in that** the following applies to the column and row voltage pulses:

$$U_{Z1max} - U_{Z1min} = U_{S1max} - U_{S1min},$$

and

$$2\Delta U < (U_{Z1max} - U_{Z1min}) / 2$$

**24.** The LCD display element according to one of the preceding claims 20 to 23, **characterized in that** the following applies to the column and row voltage pulses:

$$U_{Z1max} = U_{S1max},$$

$$U_{Z1min} = U_{S1min},$$

and

$$U_{Z1max} > U_{S0max} > U_{Z0max} > U_{Z0min} > U_{S0min} > U_{Z1min}$$

**25.** LCD display panel having a plurality of LCD display elements according to one of the preceding claims, wherein the LCD elements are rectangular, wherein the row and column leads (Z, S) of the individual LCD elements are routed through the adhesive rim (12) on one of the four sides of the rectangle (4, 8), and wherein the individual LCD elements are joined, flush against one another, on at least one of the three other sides of the rectangle (5, 6, 7).

**Revendications**

**1.** Élément d'affichage LCD sous la forme d'une disposition de pixels avec une pluralité de pixels, avec

- un premier et un deuxième disque de recouvrement optiquement transparent (1, 2) qui sont reliés avec une certaine distance entre eux par l'intermédiaire d'un bord adhésif (12),
- un cristal liquide (10) disposé entre les deux disques de recouvrement (1, 2) et le bord adhésif (12),
- une disposition d'électrodes (14) prévue dans un champ de vision (28), de forme matricielle avec s électrodes de colonnes (SE), qui sont disposées dans un premier plan (16) à l'intérieur du premier disque de recouvrement (1) et z électrodes de lignes (ZE) qui sont disposées dans un deuxième plan (22) à l'intérieur du deuxième disque de recouvrement (2),

- moyennant quoi, entre des électrodes de lignes (ZE) adjacentes sont prévues des zones de séparation (24) et entre des électrodes de colonnes (SE) adjacentes sont prévues des zones d'écartement (20) et
- les zones de croisement entre les électrodes de lignes et de colonne (ZE, SE) fixant des pixels (26) individuels,

- z conduites d'alimentation électrique de lignes (Z) pour le contrôle d'une des z électrodes de lignes (ZE),
- s conduites d'alimentation électrique de colonnes (S) pour le contrôle d'une des s électrodes de colonnes (SE),

- les conduites d'alimentation de lignes (Z) étant reliées électriquement avec l'électrode de ligne (ZE) correspondante au moyen d'éléments de contact électrique (36),
- les conduites d'alimentation des lignes et des colonnes (Z, S) étant disposées dans un premier plan (16) à l'intérieur du premier disque de recouvrement (1) et étant guidées sous le bord adhésif (12) vers l'extérieur, et
- au moins une des z conduites d'alimentation de lignes (Z) s'étendant dans la zone d'écartement (20) entre deux électrodes de colonnes (SE),

**caractérisé en ce que**
les conduites d'alimentation électrique de lignes (Z), qui s'étendent dans la zone d'écartement (20) entre deux électrodes de colonnes (SE), s'étendant transversalement au-dessus de la projection de toutes les électrodes de lignes (ZE) sur le premier plan (16),

chaque électrode de ligne (ZE) comprend un étranglement (32)

l'élément de contact électrique (36) correspondant entre en contact avec cet étranglement (32),

au niveau de l'étranglement (32) d'une électrode de ligne (ZE), les électrodes de lignes (ZE) adjacentes comprennent des pivots (34) en forme de doigts qui s'étendent en direction de l'étranglement (32) et

la zone de séparation (24) entre des électrodes de lignes (ZE) adjacentes est maintenue également entre l'étranglement (32) et le pivot (34) en forme de doigt.

**2.** Élément d'affichage LCD selon la revendication 1, **caractérisé en ce que** toutes les conduites d'alimentation électriques de lignes (Z) s'étendent transversalement au-dessus de la projection de toutes les électrodes de lignes (ZE) sur le premier plan.

**3.** Élément d'affichage LCD selon l'une des revendications précédentes, **caractérisé en ce que**

les z électrodes de lignes (ZE) et les s électrodes de colonnes (SE) comprennent chacune une première et une deuxième extrémité d'électrode (18, 19) et

les conduites d'alimentation de colonnes (S) entrent en contact avec les électrodes de colonnes (SE) au niveau des premières extrémités d'électrodes (18).

**4.** Élément d'affichage LCD selon l'une des revendications précédentes, **caractérisé en ce que**

- les éléments de contact électrique (36) sont disposés entre une conduite d'alimentation de ligne (Z) dans le premier plan (16) et une électrode de ligne (ZE) correspondante dans le deuxième plan (20) dans les zones d'écartement (20),

- les éléments de contact électrique (36) comprennent chacun une première surface de contact (38) et une deuxième surface de contact (40),

- les premières surfaces de contact (38) entrent en contact avec la conduite d'alimentation de ligne (Z) correspondante dans le premier, plan (16) et

- les deuxièmes surfaces de contact (40) entrent en contact avec l'électrode de ligne (ZE) correspondant à la conduite d'alimentation de ligne (Z) correspondante dans le deuxième plan (22).

**5.** Élément d'affichage LCD selon l'une des revendications précédentes, **caractérisé en ce que** l'étranglement (32) est disposé au niveau de l'électrode de ligne la plus haute ou la plus basse (ZE5, ZE1), sur le bord de l'électrode de ligne la plus haute ou la plus basse (ZE5, ZE1) qui est orienté vers l'arête latérale supérieure ou inférieure (7, 8).

**6.** Élément d'affichage LCD selon l'une des revendications précédentes, **caractérisé en ce que** les électrodes de colonnes (SE) comprennent, dans le premier plan (16), dans la zone autour des premières surface de contact (38), des évidements (42), de façon à ce que les zones d'écartement (20) soient élargies dans cette zone.

**7.** Élément d'affichage LCD selon l'une des revendications précédentes, **caractérisé en ce que**, pour z < s, au maximum une des z conduites d'alimentation de lignes (Z) est guidée entre deux électrodes de colonnes (SE) adjacentes.

**8.** Élément d'affichage LCD selon l'une des revendications précédentes 1 à 6, **caractérisé en ce que**, pour z ≥ s, au moins une des z conduites d'alimentation (Z) est guidée entre toutes les électrodes de colonnes (SE) adjacentes.

**9.** Élément d'affichage LCD selon l'une des revendications précédentes 1 à 6, **caractérisé en ce que**, dans toutes les zones d'écartement (20) entre les électrodes de colonnes (SE) sont disposées des conduites d'alimentation de lignes (Z).

**10.** Élément d'affichage LCD selon l'une des revendications précédentes, **caractérisé en ce que** l'élément d'affichage LCD comprend au moins une arête LCD droite (5, 6, 7, 8) et **en ce que** toutes les conduites d'alimentation de lignes et de colonnes (Z, S) sont guidées vers l'extérieur le long de cette arête LCD droite (8) sous le bord adhésif (12).

**11.** Élément d'affichage LCD selon l'une des revendications précédentes, **caractérisé en ce que**, au niveau de zones de croisement des zones d'écartement (20) avec les zones de séparation (24), sont disposés des éléments adhésifs (46).

**12.** Élément d'affichage LCD selon la revendication 11, **caractérisé en ce que** les éléments adhésifs (46) sont disposés de manière symétrique et à proximité des éléments de contact électrique (36).

**13.** Élément d'affichage LCD selon l'une des revendications précédentes 11 à 12, **caractérisé en ce qu'**entre 1 % et 5 %, et plus particulièrement entre 2 % et 3 %, des zones de croisement sont munies, entre les zones d'écartement et les zones de séparation (20, 24), d'éléments adhésifs (46).

**14.** Élément d'affichage LCD selon l'une des revendications précédentes 11 à 13, **caractérisé en ce que** les éléments adhésifs (46) sont constitués du même matériau que le bord adhésif (12).

**15.** Élément d'affichage LCD selon l'une des revendications précédentes 11 à 15, **caractérisé en ce que** les éléments de contact électrique (36) sont constitués du même matériau que le bord adhésif (12), qui contient en outre des particules conductrices (48).

**16.** Élément d'affichage LCD selon l'une des revendications précédentes 1 à 13, **caractérisé en ce que**
sur les côtés internes des deux disques de recouvrement (1, 2), est prévue une couche d'orientation de cristaux liquides (30) et
les éléments de contact électrique (36) sont réalisés à l'aide d'une application ciblée d'un matériau de couche d'orientation supplémentaire avec des particules conductrices (48) sur la couche d'orientation de cristaux liquides (30).

**17.** Élément d'affichage LCD selon la revendication 15 ou 16, **caractérisé en ce que** les particules conductrices (48) présentent un diamètre moyen (dx), qui est entre 10 % et 15 % supérieur à la distance (d) entre les deux disques de recouvrement (1, 2) et **en ce que** les différentes particules conductrices (48) sont disposées dans une direction parallèle au premier ou au deuxième plan (16, 22) sans être en permanence en contact entre elles.

**18.** Élément d'affichage LCD selon l'une des revendications précédentes, **caractérisé en ce que** le cristal liquide (10) présente une structure de cristal liquide torsadée et plus particulièrement est un cristal liquide TN ou ETN ou **en ce que** le cristal liquide (10) est du type ferro-électrique, smectique A ou smectique B ou **en ce que** le cristal liquide (10) est un cristal liquide cholestérique (ChLCD).

**19.** Élément d'affichage LCD selon l'une des revendications précédentes, **caractérisé en ce qu'**un dispositif de pilotage, qui est conçu pour contrôler les différents pixels
par alimentation des électrodes de colonnes (SE) avec une première séquence d'impulsions de tension de colonne $U_{S0i}$, avec i E {1 .. n}, avec n $\geq$ 2 pour l'état ARRÊT et par alimentation avec une deuxième séquence d'impulsions de tension de colonne $U_{S1i}$, i E {1 .. n}, avec n $\geq$ 2 pour l'état MARCHE et
par alimentation des électrodes de lignes (ZE) avec une première séquence d'impulsions de tension de ligne $U_{Z0i}$, avec i E {1 .. n}, avec n $\geq$ 2 pour l'état ARRÊT et par alimentation avec une deuxième séquence d'impulsions de tension de ligne $U_{Z1i}$, i E {1 .. n}, avec n $\geq$ 2 pour l'état MARCHE.

**20.** Élément d'affichage LCD selon la revendication 19, **caractérisé en ce que** le dispositif de pilotage est conçu pour générer des impulsions de tension ($U_{Z0i}$ ; $U_{Z1i}$ ; $U_{S0i}$ ; $U_{S1i}$) qui satisfont les inégalités suivantes (1) et (2) :

$$U_{S1max} - U_{S0min} > U_{Z1max} - U_{Z0max} \quad (1)$$

et

$$U_{S0max} - U_{S1min} > U_{Z0min} - U_{Z1min} \quad (2)$$

$U_{S1max}$ étant l'impulsion de tension maximale de la deuxième séquence d'impulsions de tension de colonnes $U_{S1i}$,
$U_{S0min}$ étant l'impulsion de tension minimale de la première séquence d'impulsions de tension de colonnes $U_{S0i}$,
$U_{Z1max}$ étant l'impulsion de tension maximale de la deuxième séquence d'impulsions de tension de lignes $U_{Z1i}$,
$U_{Z0min}$ étant l'impulsion de tension minimale de la première séquence d'impulsions de tension de lignes $U_{Z0i}$.

**21.** Élément d'affichage LCD selon la revendication 19 ou 20, **caractérisé en ce que**, pour les impulsions de tension de colonnes et de lignes, les équations suivantes s'appliquent :

$$\Delta U = U_{S1max} - U_{S0max}$$

et

$$\Delta U = U_{S0min} - U_{S1min}.$$

**22.** Élément d'affichage LCD selon la revendication 21, **caractérisé en ce que**, pour les impulsions de tension de colonnes et de lignes, les équations suivantes s'appliquent :

$$U_{Z0max} = U_{Z1max} - 2\Delta U$$

et

$$U_{Z0min} = U_{Z1min} + 2\Delta U.$$

**23.** Élément d'affichage LCD selon l'une des revendications précédentes 21 à 22, **caractérisé en ce que**, pour les impulsions de tension de colonnes et de lignes, les équations suivantes s'appliquent :

$$U_{Z1max} - U_{Z1min} = U_{S1max} - U_{S1min}$$

et

$$2\Delta U < (U_{Z1max} - U_{Z1min}) / 2.$$

**24.** Élément d'affichage LCD selon l'une des revendications précédentes 20 à 23, **caractérisé en ce que**, pour les impulsions de tension de colonnes et de lignes, les équations suivantes s'appliquent :

$$U_{Z1max} = U_{S1max},$$

$$U_{Z1min} = U_{S1min}$$

et

$$U_{Z1max} > U_{S0max} > U_{Z0max} > U_{Z0min} > U_{S0min} > U_{Z1min}.$$

**25.** Panneau d'affichage LCD avec une pluralité d'éléments d'affichage LCD selon l'une des revendications précédentes, les éléments LCD étant rectangulaires, les conduites d'alimentation de lignes et de colonnes (Z, S) des différents éléments LCD étant guidés au niveau d'une des quatre côtés du rectangle (4, 8) par le bord adhésif (12) et les différents éléments LCD étant assemblés par aboutement au niveau d'au moins un des trois autres côtés du rectangle (5, 6, 7).

Fig. 1

## Fig. 2

Fig. 3

A–A

Fig. 4

ZE5  ZE4  34 32  34 ZE2  ZE1  30

2

46-1 10   44   46-7

1

30 Z3

30

22
12
16

12

B–B

Fig. 5

ZE5  ZE4  ZE3  ZE2  ZE1  30

EP 2 284 603 B1

C–C

Fig. 6

Fig 7a

Fig 7b

SE2

SE3

Z3

ZE3

ZE2

Fig. 7d

D

A 20

36

48

42

Ø 0,3

A

Z3

Fig. 7f

d

ZE4

2

1

ZE3

38

40

48

2,1

0,3

20

26-A

26-B

ZE3

2,1

0,05

ZE2

Z3

40

38

24

48

ZE2

Fig. 7e

26-C

26-D

A—A:

SE2

SE3

Z3

0,1

Fig. 7c

Fig 8a

SE4            SE5

Z1

Fig 8b

ZE4

ZE3

Fig. 8d

SE4        Z1        SE5

ZE4

ZE3

∅ 0,3

2,1

0,3

20

26-a        26-b        ← ZE4

2,1

0,05

46-3        24

26-c        26-d        ← ZE3

Z1

0,1

Fig. 8c

Fig. 9

Stand der Technik

EP 2 284 603 B1

27

**Spalte 1**
Daten: EIN

40V

0V

US11   US12

**Spalte 2**
Daten: AUS

30V

10V

US01   US02

**Differenzsignal Spalten**

10V

-10V

kleiner

**Zeile 1**
ausgewählt

40V

0V

UZ11   UZ12

**Zeile 2**
nicht ausgewählt

35V

5V

UZ01   UZ02

update

**Display   2 * 2**

40V

UPα2

UPα1

-40V

30V

UPβ2

UPβ1

-30V

U_Pixel = U_Spalte - U_Zeile

5V

-5V

UPγ1   UPγ2

5V

-5V

UPδ1   UPδ2

**Differenzsignal Zeilen**

bzw. Zeile-Zeilenzuleitung

35V

-35V

größer

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1962129 A1
- US 20070139299 A1
- US 20080291187 A1
- JP 2001311955 A

**In der Beschreibung aufgeführte Nicht-Patentliteratur**

- **YANG, DENG-KE ; WU, SHIN-TSON.** Fundamentals of liquid crystal devices. John Wiley & Sons Ltd, 2006, 274-278
- DIRECTLY ADDRESSEDMATRIX LIQUID CRYSTAL DISPLAY PANEL WITH HIGH INFORMATION CONTENT. **KANEKO E.** MOLECULAR CRYSTALS AND LIQUID CRYSTALS. GORDON AND BREACH, 01. Januar 1986, 81-101